# EUROPEAN PATENT APPLICATION

(11) **EP 4 485 983 A1**
(43) Date of publication of application: **01.01.2025**
(21) Application number: 23182630.6
(22) Date of filing: 30.06.2023
(51) Int. Cl.: H04W 4/38, H04W 4/80, H04W 84/18, H04W 52/02

(54) **CONTROLLING ANCHOR NODES**

(71) Applicant: Haltian Oy, 90230 Oulu (FI)
(72) Inventor: Ylläsjärvi, Ville, 90230 Oulu (FI); Vaattovaara, Teemu, 90230 Oulu (FI); Sarasmo, Marko, 90230 Oulu (FI); Leskelä, Jyrki, 90230 Oulu (FI); Tuhkala, Marko, 90230 Oulu (FI); Lipponen, Sami, 90230 Oulu (FI)
(74) Representative: Kolster Oy Ab

(57) **Abstract**

An anchor node, and a method for an anchor node configured to communicate with at least one other anchor node and keep track of the location of a set of assets and active tags (100) within the coverage area of the anchor node, the anchor node comprising an energy harvester, a power storage (114), one or more light emitting diodes, a radio transceiver (108) and a control circuitry (102), the method comprising: determining (300) the power level the energy harvester of the node is capable of providing; determining (302) the amount of power stored in the power storage; determining (304) the operating power level available to the anchor node based on the determined power level and amount of power; controlling (306) the transmission mode of the radio transceiver at least in part based on the determined available power level and controlling (308) the one or more light emitting diodes to indicate the transmission mode and the power level the energy harvester of the node is capable of providing.

## Description

### FIELD

Various embodiments relate to an anchor node and controlling a set of anchor nodes.

### BACKGROUND

Tracking locations of assets in storage areas is a common need. The development of wireless communications has enabled the development of several wireless location tracking solutions. Typically, tags may be attached to assets, which location and movement need to be monitored. The tags may operate according to a determined wireless communication protocol to enable the location tracking. Examples of such communication protocols include Bluetooth^{®}, radio frequency identification (RFID), and IEEE 802.11-based protocols. The monitored area may be equipped with a set of location tracking nodes or anchor nodes at given known locations. The nodes are configured to track signals received from the assets or tags.

Depending on the size of the storage area, the number of anchor nodes may be tens or more. The anchor nodes may operate with a limited power supply, being powered by solar energy, for example. The continuous tracking operation must be ensured regardless of changes in the surrounding conditions.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
Figure 1 illustrates an embodiment of an anchor node;
Figure 2 illustrates an example of a storage with a set of anchor nodes;
Figures 3A and 3B are flowcharts illustrating embodiments for controlling an anchor node;
Figures 4A and 4B are flowcharts illustrating embodiments for controlling a set of anchor nodes;
Figure 5 illustrates an example of a storage with a set of anchor nodes;
Figures 6A, 6B, 7A and 7B illustrate embodiments of the invention.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

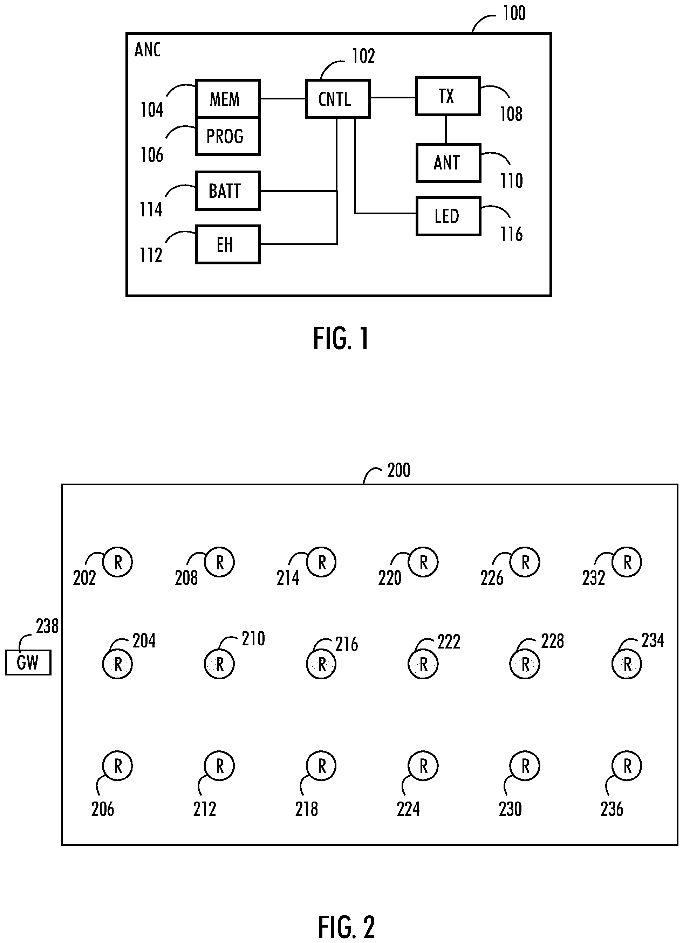

Fig. 1 illustrates an embodiment of an anchor node 100. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The anchor node 100 of the example includes a control circuitry 102 configured to control at least part of the operation of the anchor node. The control circuitry may be realised with a processor, for example.

The anchor node may comprise one or more memories 104 for storing data. Furthermore, the memory may store software 106 executable by the control circuitry 102. The memory may be integrated in the control circuitry.

A non-exhaustive list of implementation techniques for the control circuitry 102 and the memory 104, includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 104 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The software (or computer program code) 106 may be written by a suitable programming language (such as C, C++, assembler or machine language, for example), and the resulting executable code may be stored in the memory 104 and run by the control circuitry 102. The software 106 may be in source code form, object code form, executable form, or in some intermediate form, but for use in the control circuitry 102 it is in the executable form. There are many ways to structure the computer program code 106: the operations may be divided into modules, subroutines, methods, classes, objects, applets, macros, etc., depending on the software design methodology and the programming language used. In modern programming environments, there are software libraries, i.e. compilations of ready-made functions, which may be utilized by the software 106 for performing a wide variety of standard operations. In addition, an operating system (such as a general-purpose operating system or a real-time operating system) may provide the software 106 with system services.

The anchor node further comprises an energy harvester 112 and a power storage 114. The energy harvester 112 may be a solar panel configured to provide the operating power to the node. The energy harvester may generate electric power from sun light available in the storage area or from artificial light sources in the area, or both. The energy harvester may be configured to store energy to the power storage 114 so that when there is no light, the node may operate using the energy stored in the power storage.

The anchor node further comprises one or more light emitting diodes (LEDs), which may be used to various purposes. For example, the LEDs may be used to indicate the current state of the node. Further, the LEDs may be used to provide assistance when the nodes are installed in a system.

For radio communications, the anchor node 100 comprises at least one radio transceiver 108 and an antenna 110 operationally connected to the at least one radio transceiver. The radio transceiver 108 may operate according to any of the various standard/proprietary technologies utilizing various frequency bands and communication protocols. Standards include, but are not limited to, 802.11 WLAN and various Bluetooth^{®} standards including Bluetooth^{®} low energy, BLE.

The anchor node may be configured to utilize the radio transceiver 108 to communicate with at least one other anchor node and keep track of the location of a set of assets and active tags within the coverage area of the anchor node.

In an embodiment, the radio transceiver 108 may be controlled by the control circuitry to operate in two different modes. In router mode the nodes are configured to transmit data and control messages between each other and the tags and a local router. In beacon mode the nodes are configured to transmit only a beacon signal at given times to indicate that it is alive. In router mode, the power consumption is considerable larger than in beacon mode. For example, in router mode the current consumption of a node may be some mAs, while in beacon mode the current consumption of a node may be in µA range.

Fig. 2 illustrates an example of a storage area 200. The area is covered by a set of anchor nodes 202 - 236. Fig. 2 shows the anchor nodes placed with equal distances from each other, but naturally this need not be the case. The anchor nodes may communicate with each other and with a gateway 238 which provides the nodes a communication connection to external systems and apparatuses.

In an embodiment, the gateway 238 may control the operation of the anchor nodes or provide the nodes control commands from an external controller (not shown).

As the number of anchor nodes in an area may be large, it is important the installation of the nodes may be performed as smoothly and easily as possible. Typically, when the nodes are installed, the operator must be sure that the installed nodes are working correctly.

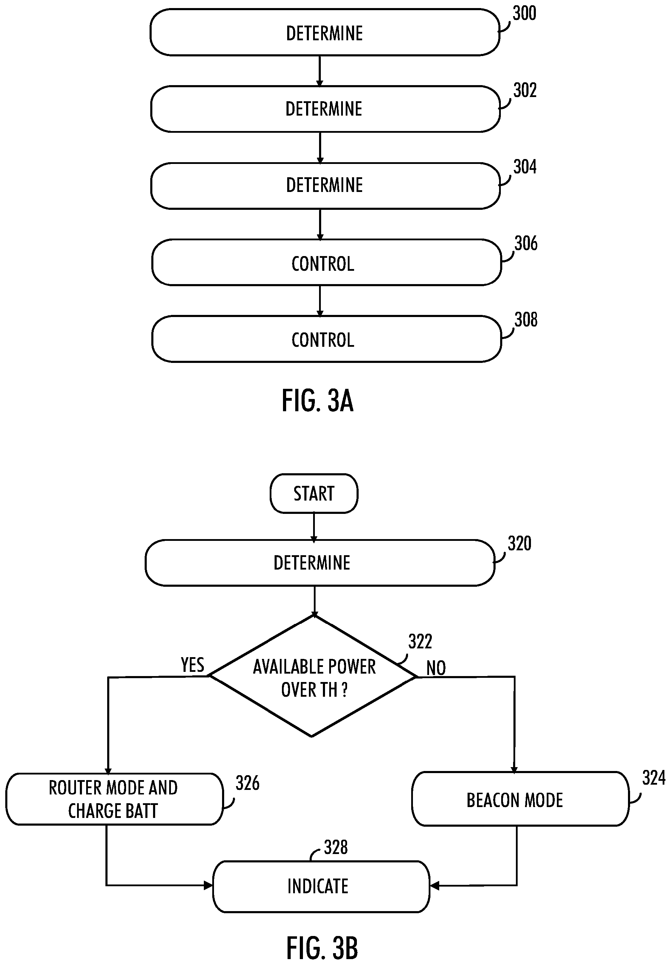

Fig.3A is a flowchart illustrating an embodiment for controlling an anchor node comprising an energy harvester, a power storage, a radio transceiver and a control circuitry.

In step 300, the control circuitry of the anchor node is configured to determine the power level the energy harvester of the node is capable of providing. If the energy harvester is a solar panel, the power level it is capable of generating is dependent on the amount of light available in the environment of the anchor node.

In step 302, the control circuitry of the anchor node is configured to determine the amount of power stored in the power storage. When an anchor node is installed, the power storage may have some the amount of power charged to it at a factory.

In step 304, the control circuitry of the anchor node is configured to determine the operating power level available to the anchor node based on the determined power level and amount of power.

In step 308, the control circuitry of the anchor node is configured to control the transmission mode of the radio transceiver at least in part based on the determined available power level.

In step 308, the control circuitry of the anchor node is configured to control the one or more light emitting diodes to indicate the transmission mode and the power level the energy harvester of the node is capable of providing.

Fig.3B is a flowchart illustrating another embodiment for controlling an anchor node comprising an energy harvester, a power storage, a radio transceiver and a control circuitry.

In step 320, the control circuitry of the anchor node is configured to determine the operating power level available to the anchor node. This is the same step as steps 300, 302 and 304 in Fig. 3A.

In step 322, the control circuitry of the anchor node is configured to compare the available power level to a given threshold.

If the available power level is below a given threshold, the control circuitry is configured to control 324 the radio transceiver of the anchor node to operate in a beacon mode to save power.

If the available power level is above a given threshold, the control circuitry is configured to control 326 the radio transceiver of the anchor node to operate in a router mode. In an embodiment, the threshold may be chosen so that not only the power storage has energy stored but also the energy harvester is capable of producing operating power.

In step 328, the control circuitry of the anchor node is configured to control the one or more light emitting diodes to indicate the transmission mode and the power level the energy harvester of the node is capable of providing.

To aid the installing operator, the control circuitry of the anchor node may be configured to control the one or more light emitting diodes of the anchor node to indicate whether a connection to at least one other anchor node has been found or not. The LEDs may be controlled to indicate the state of the radio network in general. If network is not accessible, the installing operator may immediately detect the faulty network based on the indication given by the node.

In an embodiment, the control circuitry is configured to control the one or more light emitting diodes to indicate whether the power level the energy harvester of the node is capable of charging the power storage.

In an embodiment, the anchor node comprises a machine-readable optical label comprising data about the properties of the anchor node", e.g., a node ID that is used when determining the location and operation mode for the anchor.

In an embodiment, the control circuitry is configured to store a factory set identification of the anchor node and control the anchor node upon installation automatically to join a network with a corresponding identification.

In addition, the control circuitry is configured to control the one or more light emitting diodes to indicate whether an external power source is connected. Further, the LEDs may be used to indicate possible errors and faults in the operation of the node or the system. The LEDs may also be used to indicate issues related to software updates, for example.

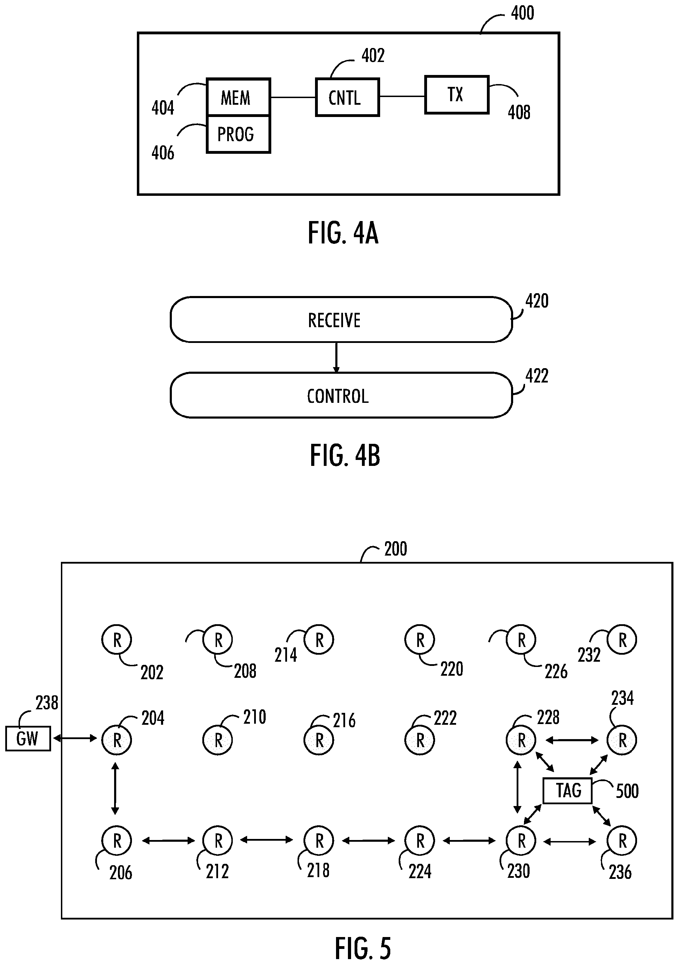

Figs. 4A and 4B illustrate an example for controlling a set of anchor nodes. The figures illustrate an example of the operation of an apparatus configured to communicate with and control set of anchor nodes. The apparatus may be a local router connected to the set of anchor nodes or an external server or device connected to the set of anchor nodes typically via a local router.

Fig. 4A illustrates an example of the apparatus for controlling a set of anchor nodes, which are configured to communicate with at least one other anchor node and keep track of the location of a set of assets and active tags within the coverage area of the set of anchor nodes. It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus 400 a control circuitry 402 configured to control at least part of the operation of the apparatus. The control circuitry may be realised with a processor, for example.

The apparatus may comprise one or more memories 404 for storing data. Furthermore, the memory may store software 406 executable by the control circuitry 402. The memory may be integrated in the control circuitry.

The control circuitry 102 and the memory 104 may be implemented in a similar manner as described in connection with the anchor node.

The apparatus further comprises one or more interfaces 408 for communicating with the anchor nodes and other apparatuses. The interfaces may realise a wired or a wireless communication.

In an embodiment, the apparatus is a local gateway 238 connected to the set of anchor nodes.

In an embodiment, the apparatus is an external apparatus configured to communicate with the set of anchor nodes via the local gateway 238.

Fig.4B is a flowchart illustrating an example where the apparatus 400 controls a set of anchor nodes comprising an energy harvester, a power storage, a radio transceiver, and a control circuitry.

In step 420, the control circuitry of the apparatus is configured to control the transceiver to receive from one or more anchor nodes of the set of anchor nodes, information on the available operating power level of the anchor nodes.

In step 422, the control circuitry of the apparatus is configured to control, based on the received information, a first subset of the set of anchor nodes to a router mode and a second subset of the set of anchor nodes to a beacon mode.

In an embodiment, the control circuitry is further configured to change the subset an anchor node of the set of anchor nodes belongs to, as a function of elapsed time. Thus, some of the anchor nodes are in router mode and some of the nodes are in beacon mode at the same time. The nodes may be controlled to change the mode from time to time. The purpose of the operation is to conserve the operating power of the nodes but still maintain operation capability of the set of nodes, i.e., keep track of the location of a set of assets and active tags. Thus, the operation of the node network may be guaranteed even in situations where the operating power available to the nodes is low, for example in situations where there is dark in the warehouse or the storage area where the nodes are located.

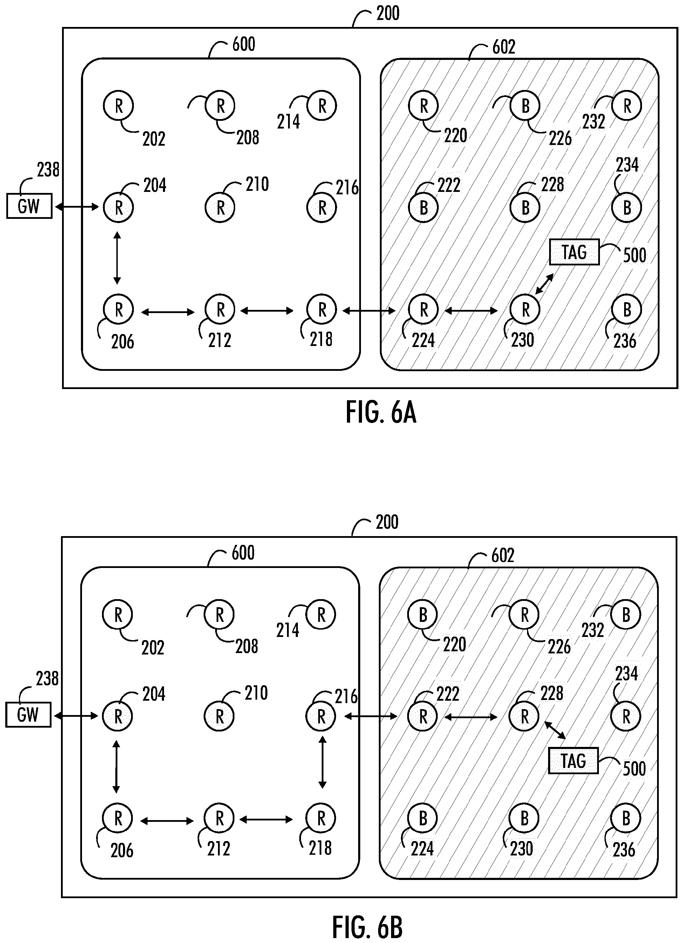

Figs. 5, 6A and 6B illustrates some embodiments applied in the storage area 200 of Fig. 2. The storage area 200 is covered by a set of anchor nodes 202 - 236. The anchor nodes comprise energy harvesters and a power storage. In this nonlimiting example it is assumed that the energy harvesters are configured to generate energy from light. In an embodiment, the gateway 238 may control the operation of the anchor nodes.

Fig. 5 illustrates a situation, where the anchor nodes are capable of generating power from available light in the environment of the nodes. All nodes are in router mode (marked with 'R'). There is a tag 500 that communicates with anchor nodes, in this example the tag may transmit a signal and nodes 228, 230, 234, 236 receive the signal and route it forward to the gateway 238. In this example, the data flow from the tag 500 to the gateway 238 is formed using nodes 230, 224, 218, 212, 206 and 204.

Fig. 6A illustrates a situation, where half 600 of the anchor nodes are capable of generating power from available light and the other half 602 of the nodes are in a situation where there is less light available. The windows of the storage room may be covered, or lights switched off. The gateway 238 may be configured to receive from anchor nodes information on the available operating power level of the anchor nodes. In this example, from the information sent by the nodes in the other half 602 the gateway may determine that they are not capable of generating power enough for full time operation, for example.

The gateway is configured in this example to control a first subset of the set of anchor nodes to a router mode and a second subset of the set of anchor nodes to a beacon mode. The first subset comprises nodes 220, 224, 230, 232 (marked with 'R'). The second subset comprises nodes 222, 226, 228,234 and 236 (marked with 'B').

Although only part of the nodes are in router mode, the tag 500 is capable of transmitting data to the gateway because the nodes in router mode may create a data path for the tag. In this example, is formed using nodes 230, 224, 218, 212, 206 and 204.

In an embodiment, the gateway is configured to change the subset an anchor node of the set of anchor nodes belongs to, as a function of elapsed time. An example of this is illustrated in Fig. 6B. In this example, the gateway controls the first subset (nodes in router mode) to comprise nodes 222, 226, 228, and 234 (marked with 'R') and the second subset (nodes in beacon on mode) to comprise nodes 220, 224, 230, 232 and 236 (marked with 'B').

Again, although only part of the nodes are in router mode, the tag 500 is capable of transmitting data to the gateway because the nodes in router mode may create a data path for the tag. In this example, is formed using nodes 228, 216, 218, 212, 206 and 204.

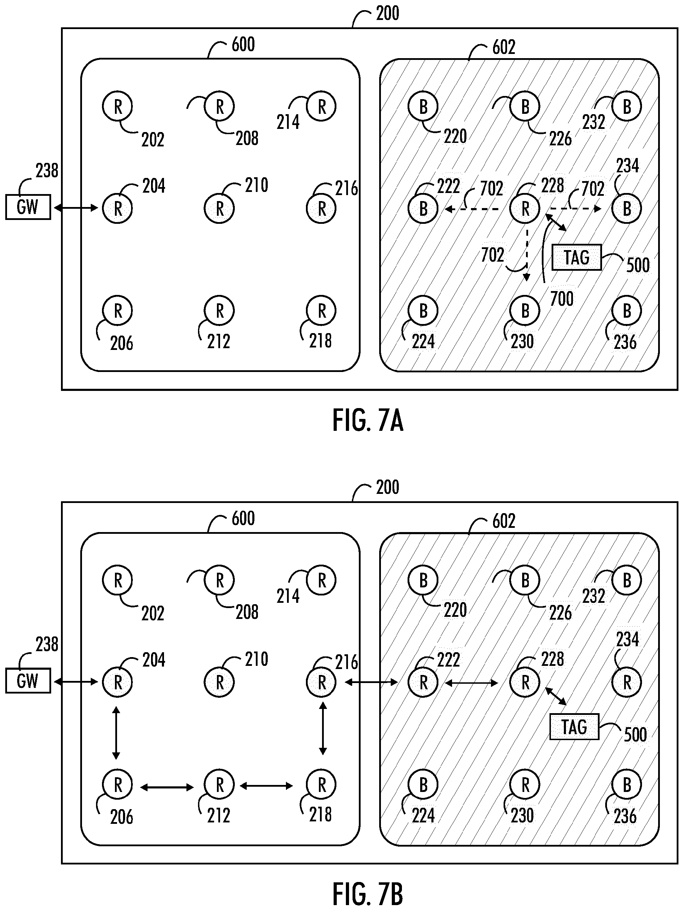

Figs 7A and 7B illustrate an embodiment. Here, to conserve energy in anchor nodes, only a small subset of nodes, in this example only one node 228, is in router mode and the rest of the nodes in the given area 602 are in beacon mode. The node 228 may detect a transmission 700 from a tag 500. Based on the detection the control circuitry of the anchor node 228 may control the radio transceiver of the node to command 702 one or more other anchor nodes to switch to a router mode. In this example, the node transmits a command to nearby nodes 222, 230, 234.

Based on the command 702, the nodes 222, 230, 234 switch to router mode. As Fig. 7B illustrates, the data from the tag 500 may now be transmitted to the gateway 238 via nodes 228, 222, 216, 218, 212, 206, and 204, for example.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An anchor node configured to communicate with at least one other anchor node and keep track of the location of a set of assets and active tags (100) within the coverage area of the anchor node, the anchor node comprising an energy harvester, a power storage (114), one or more light emitting diodes (116), a radio transceiver (108) and a control circuitry (102) configured to cause performance of at least the following:
determine the power level the energy harvester of the node is capable of providing;
determine the amount of power stored in the power storage;
determine the operating power level available to the anchor node based on the determined power level and amount of power;
control the transmission mode of the radio transceiver at least in part based on the determined available power level;
control the one or more light emitting diodes to indicate the transmission mode and the power level the energy harvester of the node is capable of providing.

2. The anchor node of any preceding claim, wherein control circuitry (102) is configured to control the one or more light emitting diodes to indicate whether a connection to at least one other anchor node has been found or not.

3. The anchor node of any preceding claim, wherein control circuitry (102) is configured to control the radio transceiver to operate in a beacon mode if the determined operating power level is below a given threshold; otherwise control the radio transceiver to operate in a router mode.

4. The anchor node of claim 3, wherein control circuitry (102) is configured to detect a transmission from an asset or a tag and based on the detection control the radio transceiver to command the at least one other anchor node to switch to a router mode.

5. The anchor node of any preceding claim, wherein control circuitry (102) is configured to control the one or more light emitting diodes to indicate whether the power level the energy harvester of the node is capable of charging the power storage.

6. The anchor node of any preceding claim, wherein the anchor node comprises a machine-readable optical label comprising data about the properties of the anchor node.

7. The anchor node of any preceding claim, wherein control circuitry (102) is configured to store a factory set identification of the anchor node and control the anchor node upon installation automatically to join a network with a corresponding identification.

8. A method for an anchor node configured to communicate with at least one other anchor node and keep track of the location of a set of assets and active tags (100) within the coverage area of the anchor node, the anchor node comprising an energy harvester, a power storage (114), one or more light emitting diodes, a radio transceiver (108) and a control circuitry (102), the method comprising:
determining the power level the energy harvester of the node is capable of providing;
determining the amount of power stored in the power storage;
determining the operating power level available to the anchor node based on the determined power level and amount of power;
controlling the transmission mode of the radio transceiver at least in part based on the determined available power level;
controlling the one or more light emitting diodes to indicate the transmission mode and the power level the energy harvester of the node is capable of providing.

9. The method of claim 8, further comprising: controlling the one or more light emitting diodes to indicate whether a connection to at least one other anchor node has been found or not.

10. The method of claim 8 or 9, further comprising: controlling the radio transceiver to operate in a beacon mode if the determined operating power level is below a given threshold; otherwise control the radio transceiver to operate in a router mode.

11. The method of any preceding claim 8-10, further comprising: detecting a transmission from an asset or a tag and based on the detection control the radio transceiver to command the at least one other anchor node to switch to a router mode.

12. The method of any preceding claim 8-11, further comprising: controlling the one or more light emitting diodes to indicate whether the power level the energy harvester of the node is capable of charging the power storage.

13. The method of any preceding claim 8-12, wherein the anchor node comprises a machine-readable optical label comprising data about the properties of the anchor node.

14. The method of any preceding claim 8-11, further comprising: storing a factory set identification of the anchor node and control the anchor node upon installation automatically to join a network with a corresponding identification.
